Europäisches Patentamt

**European Patent Office**

**Office européen des brevets**

(11) Publication number: **0 129 605**

**A1**

(12) # EUROPEAN PATENT APPLICATION

published in accordance with Art. 158(3) EPC

(21) Application number: **84900111.0**

(22) Date of filing: **20.12.83**

Data of the international application taken as a basis:

(86) International application number:
**PCT/JP83/00444**

(87) International publication number:
**WO84/02602 (05.07.84 84/16)**

(51) Int. Cl.⁴: **G 11 B 5/02**

(30) Priority: **23.12.82 JP 232432/82**
**15.11.83 JP 214863/83**

(43) Date of publication of application:
**02.01.85 Bulletin 85/1**

(84) Designated Contracting States:
**DE FR GB NL**

(71) Applicant: **SONY CORPORATION**
**7-35 Kitashinagawa 6-Chome Shinagawa-ku**
**Tokyo 141(JP)**

(72) Inventor: **KANEKO, Masahiko Sony Corporation**
**7-35, Kitashinagawa 6-chome Shinagawa-ku**
**Tokyo 141(JP)**

(72) Inventor: **TAMADA, Hitoshi**
**Sony Corporation 7-35, Kitashinagawa 6-chome**
**Shinagawa-ku Tokyo 141(JP)**

(72) Inventor: **OKAMOTO, Tsutomu**
**Sony Corporation 7-35, Kitashinagawa 6-chome**
**Shinagawa-ku Tokyo 141(JP)**

(72) Inventor: **YAMADA, Toshiro**
**Sony Corporation 7-35, Kitashinagawa 6-chome**
**Shinagawa-ku Tokyo 141(JP)**

(74) Representative: **Cotter, Ivan John et al,**
**D. YOUNG & CO. 10 Staple Inn**
**London WC1V 7RD(GB)**

(54) THERMOMAGNETIC OPTICAL RECORDING METHOD.

(57) Thermomagnetic optical recording method which can be employed in a photomagnetic disk apparatus using a photomagnetic memory. The surface of a substrate (1) is provided with a recording film by deposition, that is, with a soft magnetic film (2) which is easily magnetized perpendicular to its plane, and in which recording is effected by means of magnetic bubbles. A metal or semi-metal film (3) is laminated onto the film (2) by deposition so that it is directly adjacent thereto, to form a recording medium (4). Then a bias magnetic field is applied to the magnetizable film (2) of the recording medium (4) so that a single magnetic domain is produced over all the surface thereof, and the magnetization thereof is oriented in a direction perpendicular to the plane of the film. Laser beam pulses are applied onto the single magnetic domain to form a cylindrical magnetic domain which is magnetized in the direction opposite to the direction of magnetization of the applied bias magnetic field, to record bit data. This arrangement makes it possible to effect recording by means of a semiconductor laser with an output wavelength which is barely absorbed by the magnetizable film (2) acting as the recording film, e.g., of a long wavelength.

*FIG. 3*

DESCRIPTION

TITLE OF THE INVENTION

THERMOMAGNETIC RECORDING SYSTEM

TECHNICAL FIELD

The present invention relates to a thermomagnetic recording system in which the recording of an information is carried out by heat generated by the irradiation of light and which is used in optical magnetic disc apparatus or the like.

BACKGROUND ART

There is a known thermomagnetic recording system which uses a layer of soft magnetic material having an easy axis of magnetization normal to the layer surface on which the thermomagnetic recording is performed by irradiating a laser light thereon is disclosed in the publicated document of Japanese patent application unexamined No. 158005/1982 (Japanese patent application, No. 45232/1981) filed by the present applicant. The layer of soft magnetic material having an easy axis of magnetization normal to the layer surface is a layer made of soft magnetic material, for example, YSmCaFeGe-series garnet such as $(YSmCa)_3(FeGe)_5O_{12}$ or the like, having uniaxial magnetic anisotropy strong in the direction normal to the layer surface and an easy axis of magnetization normal to the layer surface. The layer of soft magnetic material having an easy axis of magnetization normal to the layer surface is required to have such soft magnetic property that when this layer is used as a recording medium, the diameter of information bits to be written therein is practically determined only by a bias magnetic field, and the coercive force thereof is desired to be less than about 3 Oe, preferably about 1 Oe or below. This layer of soft magnetic material having an easy axis of magnetization normal to the layer surface is formed by growing on a crystalline substrate of rare-earth gallium garnet such as non-magnetic gadolinium gallium garnet (GGG) by the liquid phase epitaxial (LPE) growth of YSmCaFeGe-series garnet crystal or the like. The writing an information on that layer is carried out such that a bias magnetic field of a predetermined strength is first applied to the layer of the soft magnetic material so as to make the layer magnetized to have a single magnetic domain over the whole visual field thereof and magnetization directed to the direction perpendicular to the layer surface. Then, under this state, when an optical pulse is incident on the layer surface being focussed thereon, the writing of an information on the layer can be performed. The bits thus written are cylindrical magnetic domains each having a predetermined diameter and the magnetization directed to the direction opposite to the applied bias magnetic field.

The strength of the bias magnetic field applied to the layer of soft magnetic material so as to produce a single magnetic domain therein over the whole visual field thereof is selected in a range from the run-out magnetic field to the collapse magnetic field of the material, for example, between 57 Oe and 73 Oe for the LPE layer of $(YSmCa)_3(FeGe)_5O_{12}$. Because the coercive force, particularly magnetic wall coercive force of the layer of soft magnetic material is extremely small and hence the bias magnetic field applied thereto can be small, the bias magnetic field applying means may be a small solenoid coil, rubber magnet or the like.

The reading-out of the information from the magnetized layer on which the recording was made is carried out such that the light, for example, laser light is linearly polarized by a polarizer and then irradiated on the recorded medium. If so, when the linearly polarized light passes through the magnetized layer, it is subjected to the rotation by the Faraday-effect. Thus, if this rotated light is applied through an analyzer into a photodetecting means, the output corresponding to the information bits is produced therefrom and hence the reading-out of the information is performed.

In such thermomagnetic recording system, however, the garnet film used as a recording layer presents the transmission property for light of wavelength longer than about 530 nm and hence the light of such long-wavelength can almost not be absorbed by the film having a thickness of 10-µm or below. Therefore, in this thermomagnetic recording system, a semiconductor laser having a wavelength of about 800 nm can not be used as the light source, but instead an argon laser or the like is used, which becomes an obstacle to make the apparatus small in size and simple in structure.

The present invention is to obviate the defects in the thermomagnetic recording system mentioned above and to enable that even a semiconductor laser having a long wavelength which could not be absorbed by the magnetized film, can be used to record informations in the layer.

DISCLOSURE OF INVENTION

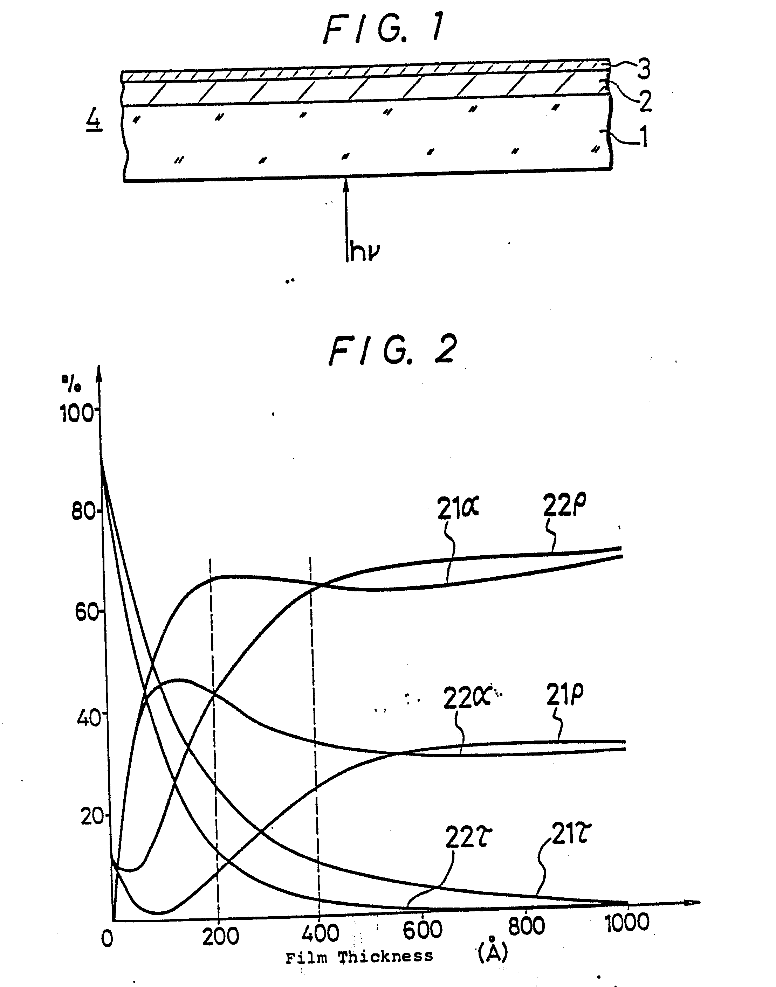

According to the present invention, as shown in Fig. 1, on a crystalline substrate 1 such as a GGG substrate formed is a recording layer, namely, a layer 2 of soft magnetic material having an easy axis of magnetization normal to the layer surface grown in which an information is recorded in the form of magnetic bubbles and then a metal film or semi-metal film 3 is directly superposed on the layer 2 to thereby form a recording medium 4. The metal film 3 may be made of any metal of the transition metals of groups Ib, IIb, IIIa , IVa, Va, VIa, VIIa and VIII , group III b except boron B and Pb on the periodic table and especially metals with a melting point higher than the temperature upon recording typically such as Aℓ or Cr or any alloy of them. While, the semi-metal film can be made of Te, Bi, Sb or alloy of them. Then, a bias magnetic field is applied to the layer 2 such that it is magnetized to have a single magnetic domain and a magnetization directed to the direction perpendicular to the layer surface over its whole surface. Under this condition, the light pulse of a semiconductor laser light of a predetermined wavelength, for example, 830 nm or, for example, He-Ne laser light is radiated on the single magnetic domain to thereby form cylindrical magnetic domains magnetized in the opposite direction to the magnetization direction of the applied bias magnetic field, thus to record bit informations. In this case, due to the fact that the metal film or semi-metal film 3 is formed on the recording medium 4, the light absorption can be efficiently carried out. When the film thickness of the metal film or semi-metal film 3 is less than 50 $\overset{o}{A}$, light is difficult to be absorbed, but if it exceeds 1000 $\overset{o}{A}$, much energy is necessary to heat the film 3 itself. It is thus desirable that the film thickness of the metal film or semi-metal film 3 be selected as thin as possible within the range from 50 to 1000 $\overset{o}{A}$.

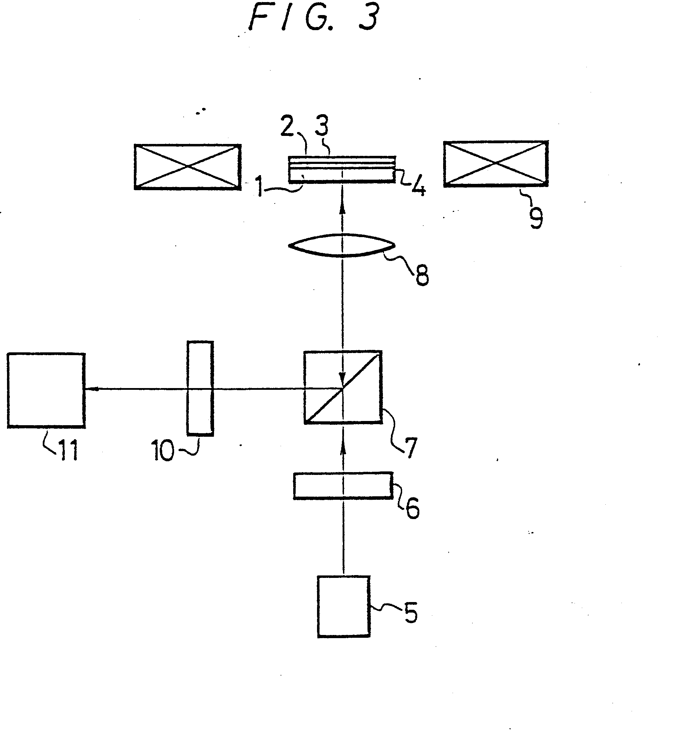

The recording (writing) in and reproducing (reading) from the recording medium 4 of such construction are carried out as follows. That is, as, for example, shown in Fig. 3, a light source apparatus 5 which includes a light source such as the He-Ne laser, semiconductor laser or the like and an optical modulator and which can emit a light pulse is provided. The light pulse emitted therefrom is linearly polarized by a polarizer 6 and focussed through a beam splitter 7 and an objective lens 8 on the metal film or semi-metal film 3 of the medium 4. Also, for example, the bias magnetic field generating coil of a bias magnetic field generating means 9 is located around the medium 4. Thus, the bias magnetic field generating means 9 produces a bias magnetic field by which the single magnetic domain can be formed in the layer of soft magnetic material over the whole visual field thereof. The intensity of this bias magnetic field is selected in the range from the run-out magnetic field (by which the magnetic bubble domains are shaped in line) to the collapse magnetic field (by which no magnetic bubble domains are produced). Under the condition that the layer 2 is magnetized to have the single magnetic domain over its whole visual field and the magnetization direction perpendicular to the layer surface, the light pulse modulated by a signal to be recorded from the light source apparatus 5 is irradiated on the medium 4 from its side of the substrate 1. Then, almost all of the laser light, for example, He-Ne laser light ($\lambda = 633$ nm) or semiconductor laser light ($\lambda = 830$ nm) passes through the magnetized layer 2, but a part of the passed laser light is absorbed by the metal film or semi-metal film 3 therebehind and another part thereof is reflected thereon. Thus, the light is converted to heat energy with high efficiency. That is, the light absorbed by the metal film or semi-metal film 3 is converted to heat therein and the magnetized layer 2 in contact therewith is heated at this part so that necessary information is efficiently recorded in the film 2 of the medium 4 in the form of cylindrical magnetic domains (magnetic bubble domains) in response to the laser light beam.

The bit-informations once written can be erased by applying to the layer a magnetic filed higher than the collapse magnetic field. In this case, since the collapse magnetic field of the layer 2 of soft magnetic material is very low, the bit informations can be easily erased.

The reading of the information from the medium 4 on which the recording is carried out as above is performed by utilizing the magneto optic effect. That is, as shown in for example, Fig. 3, the laser light from the laser light source of the light source apparatus 5 is linearly polarized by the polarizer 6 and introduced into the medium 4. Then, the light passed through the magnetized layer 2 is reflected on the metal or semi-metal film 3 and again passed through the magnetized layer 2. In this case, the laser light, when passing through the layer 2, undergoes Faraday rotation in the clockwise or counter-clockwise direction in response to the magnetized direction of the cylindrical magnetic domains existing in the magnetized layer 2. In this case, since the laser light passes through the layer 2 twice, it undergoes two-fold Faraday rotation as compared with the transmission type recording medium, the reading with high contrast can be carried out.

The light thus read-out is rotated with its plane of polarization by the Faraday effect so that if it is introduced through an analyzer 10 to detecting means 11, the output corresponding to the rotation of the plane of polarization, accordingly the information in the magnetized layer can be detected.

As set forth above, according to the thermomagnetic recording system of the present invention, a long-wavelength recording-light can be efficiently recorded, so that a small-sized semiconductor laser can be used as a light source and hence the whole of the apparatus can be made small and simplified remarkably. Also, upon reading, the reading light passes through the magnetized layer twice, so that the rotation by Faraday effect can be made twice and hence the reading with high contrast becomes possible.

In addition, when in the mddium 4 the metal film 3 is formed on the surface of the magnetized layer 2 opposite to the substrate 1 as shown in Fig. 1, this film 3 can also serve as a protective film for the magnetized layer 2.

BRIEF DESCRIPTION OF THE DRAWINGS

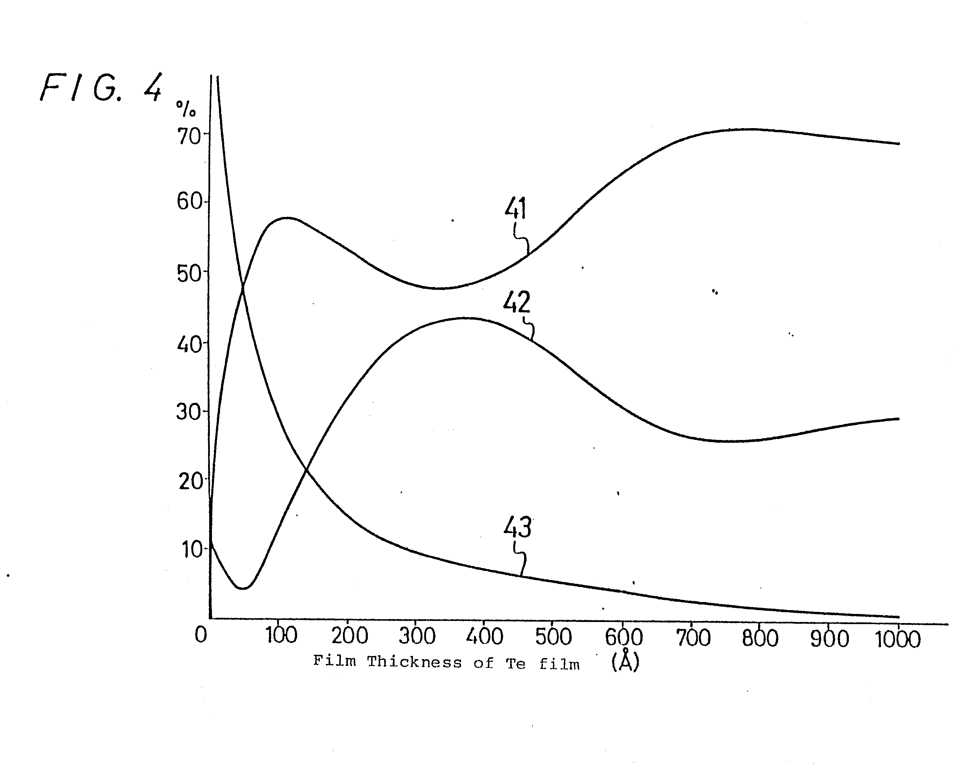

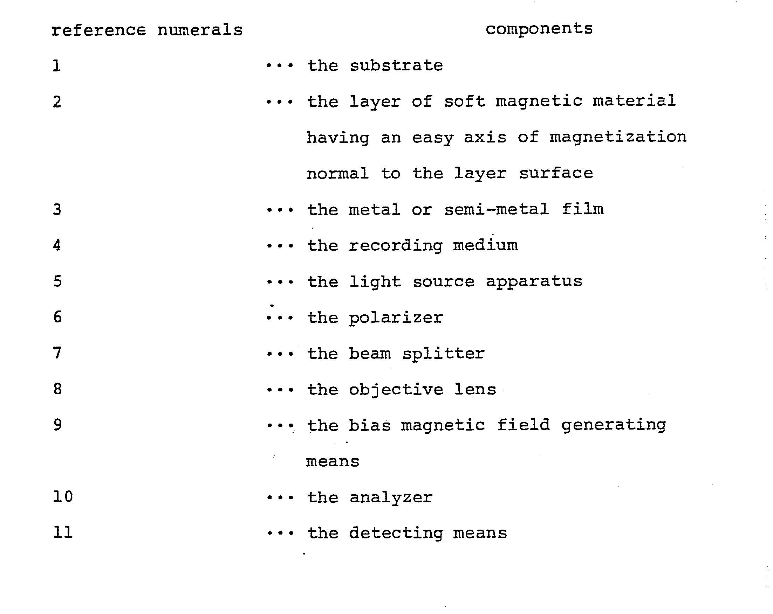

Fig. 1 is a schematically cross-sectional view of an example of a recording medium for carrying out the thermomagnetic recording system of the present invention, Figs. 2 and 4 are graphs of the optical characteristics of the recording meidum and Fig. 3 is a schematical block diagram of an example of the recording and reproducing apparatus for carrying out the thermomagnetic recording system of the present invention.

## BEST MODE FOR CARRYING OUT THE INVENTION

### Example 1

On a $Gd_3Ga_3O_{12}$ garnet substrate 1 of 0.5 mm thickness a layer 2 of soft magnetic material having an easy axis of magnetization normal to the layer surface made of $(BiTm)_3(FeGa)_5O_{12}$ having a thickness of 1.3 μm was formed by the liquid-phase epitaxial growth technique (LPE technique). Particularly in this invention, the metal film 3 made of chromium Cr having a thickness of 400 Å (measured by the taly step) was further formed on the layer 2. When a semiconductor laser light having 830 nm wavelength and 1 μm beam diameter was incident on the metal film 3 through the substrate 1 and the layer 2, its optical absorptance, α was 70 % and its reflectivity, ρ was 11 %. In this case, the minimum power Pw per pulse duration of 1 μs necessary for the recording was 1.5 mW.

In this connection, in the conventional structure with no metal film 3 in example 1, when the argon Ar laser light of 488 nm wavelength and of pulse duration, 5 μs is used for recording therein, Pw = 1.3 mW. Thus, according to this example of the invention, even though the semiconductor laser light is used for the recording, only substantially the same power as in the prior art is enough for the recording.

### Example 2

In the medium of the same structure as example 1, the metal film 3 was formed of an Aℓ metal film of 200 Å thickness (measured by the taly step). In this case,

0129605

optical absorptance $\alpha$ was measured as 46 %, reflectivity $\rho$ as 37 % and minimum power Pw necessary for the recording as 2.8 mW for beam diameter of 1 µm and pulse width of 1 µs. The reason why the necessary power in example 2 using Al is larger than that in example 1 which employed Cr will probably be considered that the Al film has smaller optical absorptance $\alpha$ than the Cr film. Fig. 2 shows calculated results of optical characteristics of Cr and Al metal films of different thickness to the semiconductor laser light (wavelength $\lambda = 830$ nm). Curves $21\alpha$ and $22\alpha$ respectively indicate optical absorptance of the Cr and Al metal films, $21\rho$ and $22\rho$ reflectivities of the Cr and Al metal films, respectively and $21\tau$ and $22\tau$ optical transmissivity of the Cr and Al metal films respectively.

Example 3

The layer 2 of soft magnetic material made of $(BiTm)_3(FeGa)_5O_{12}$ having a thickness of 1.1 µm was formed on the $Gd_3Ga_3O_{12}$ garnet substrate 1 of 0.5 mm thickness by the liquid phase epitaxial growth technique (LPE technique). Particularly in this invention, Te, semi-metal film 3 of 1000 $\overset{\circ}{A}$ thickness was further formed on this layer 2. The thermal conductivity of the Te film 3 is 0.015 W/cm·deg and the melting point thereof is 450°C. The Te film 3 of 1000 $\overset{\circ}{A}$ thickness showed optical absorptance $\alpha$, 75 % and reflectivity $\rho$, 25 %, for example, for the He-Ne laser light of wavelength $\lambda$, 633 nm and $\alpha$, 72 % and $\rho$, 26 % for the semiconductor laser light of wavelength $\lambda$, 830 nm.

In this case, in case of using the He-Ne laser as the light source, when its pulse width was 2 ms and the incident laser light amount was 3 mW or above, the recording thereof or information bits were formed by the formation of magnetic bubble domains and when the pulse width was 10 µs and the incident laser light amount was 6 mW or above, its recording was carried out.

Although the light from the He-Ne laser, semiconductor laser and argon Ar laser have respectively different wavelengths, the temperature generated thereby may be considered constant for pulse width of 10 µs or above from the analysis of the thermal conductivity. Thus, even when light of long wavelengths emitted from the He-Ne laser and semiconductor laser can be used for recording with the incident light amount equal to or below that as when the argon Ar laser is used for the prior art medium having no metal film 3.

While in the example 3 the semi-metal film 3 is formed of Te film of 1000 Å thickness, its optical absorptance $\alpha$, reflectivity $\rho$ and optical transmissivity $\tau$ respectively vary depending on the film thickness. In Fig. 4, curves 41, 42 and 43 respectively indicate the relationships of $\alpha$, $\rho$ and $\tau$ for $\lambda$, 830 nm to the film thickness.

In addition to Te, the semi-metal film 3 may be made of Bi, Sb or any alloy of them. Thermal conductivities and melting points of Bi and Sb are 0.085 W/cm·deg, 0.18 W/cm·deg and 271°C and 631°C, respectively.

CLAIMS

1.      A thermomagnetic recording system comprising a layer of soft magnetic material having an easy axis of magnetization normal to the layer surface, a metal or semi-metal film superposed directly on said layer of soft magnetic material, and bias magnetic field applying means for applying a bias magnetic field to said layer of soft magnetic material such that said layer can be magnetized to have a single magnetic domain over its whole surface and a magnetization directed to the direction perpendicular to the layer surface, wherein under the condition that said bias magnetic field is applied to said layer, a light is made incident onto said single magnetic domain to form cylindrical magnetic domains magnetized in the opposite direction to the magnetized direction by said bias magnetic field, thereby recording bit informations.

2.      A thermomagnetic recording system according to claim 1, wherein said metal layer is made of transition metal selected from groups Ib, IIb, IIIa, IVa, Va, VIa, VIIa and VIII, and metal selected from group IIIb except boron and Pb, on the periodic table.

3.      A thermomagnetic recording system according to claim 1, wherein said semi-metal film is made of Te, Bi, Sb or alloy of two or above of said metals.

4.      A thermomagnetic recording system according to claim 2, wherein said metal film is made of Aℓ or Cr.

5.      A thermomagnetic recording system according to claim 1, wherein said layer of soft magnetic material having an easy axis of magnetization normal to the layer surface is made of soft magnetic garnet.

6.      A thermomagnetic recording system according to claim 1, wherein said light is such a light with a wavelength which can pass through said layer of soft magnetic material.

7.      A thermomagnetic recording system according to claim 1, wherein said metal or semi-metal film has a film thickness ranging from 50 to 1000 Å.

8.      A thermomagnetic recording system according to claim 5, wherein said garnet layer is made of garnet containing rare earth element.

9.      A thermomagnetic recording system according to claim 5, wherein said layer of soft magnetic material having an easy axis of magnetization normal to the layer surface is made of a soft magnetic material garnet layer which is grown on a non-magnetic garnet substrate by the liquid phase epitaxial technique.

10.      A thermomagnetic recording system according to claim 6, wherein said light is a light emitted from a He-Ne laser or a semiconductor laser.

1

# FIG. 1

3
2
4
1

$h\nu$

# FIG. 2

%
100
80
60
40
20

$21\alpha$   $22\rho$

$22\alpha$   $21\rho$

$22\tau$   $21\tau$

0   200   400   600   800   1000

Film Thickness   (Å)

2

## F I G. 3

# FIG. 4

Film Thickness of Te film　(Å)

| reference numerals | components |
| --- | --- |
| 1 | ··· the substrate |
| 2 | ··· the layer of soft magnetic material having an easy axis of magnetization normal to the layer surface |
| 3 | ··· the metal or semi-metal film |
| 4 | ··· the recording medium |
| 5 | ··· the light source apparatus |
| 6 | ··· the polarizer |
| 7 | ··· the beam splitter |
| 8 | ··· the objective lens |
| 9 | ··· the bias magnetic field generating means |
| 10 | ··· the analyzer |
| 11 | ··· the detecting means |

# INTERNATIONAL SEARCH REPORT
## 0129605

International Application No. PCT/JP83/00444

**I. CLASSIFICATION OF SUBJECT MATTER** (if several classification symbols apply, indicate all) ³

According to International Patent Classification (IPC) or to both National Classification and IPC

Int. Cl³     G11B 5/02

**II. FIELDS SEARCHED**

Minimum Documentation Searched ⁴

| Classification System | Classification Symbols |
|---|---|
| IPC | G11B 5/02, G11B 11/10, G11C 13/06 |

Documentation Searched other than Minimum Documentation
to the Extent that such Documents are Included in the Fields Searched ⁵

| | | |
|---|---|---|
| | Jitsuyo Shinan Koho | 1964 – 1983 |
| | Kokai Jitsuyo Shinan Koho | 1971 – 1983 |

**III. DOCUMENTS CONSIDERED TO BE RELEVANT** ¹⁴

| Category* | Citation of Document, ¹⁶ with Indication, where appropriate, of the relevant passages ¹⁷ | Relevant to Claim No. ¹⁸ |
|---|---|---|
| Y | JP,A,56-74843, (Fuji Photo Film Co., Ltd.), 20 June 1981 (20. 06. 81), Page 1, lower left column, lines 5 to 8, Figs. 1, 2 | 1 |
| Y | JP,A,57-12428, (Sharp Corp.), 22 January 1982 (22. 01. 82), Page 1, lower left column, lines 5 to 7 & FR,A1,2485241 & GB,A,2081537 & DE,A1,3124573 | 1, 2, 4 |
| Y | JP,A,57-50329, (Matsushita Electric Industrial Co., Ltd.), 24 March 1982 (24. 03. 82), Page 2, upper left column, lines 15 to 19, Fig. 2 | 1, 2, 4 |
| Y | JP,A,56-155515, (Olympus Optical Co., Ltd.), 1 December 1981 (01. 12. 81), Page 1, lower left column, line 5 to lower right column, line 3 & EP,A1,39463 & US,A,433991 | 5, 8, 9 |
| A | JP,B1,49-43480, (International Business Machine Corp.), 21 November 1974 (21. 11. 74), Page 2, left column, lines 14 to 23 & DE,B2,2057099 | 8 |

* Special categories of cited documents: ¹⁵

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search ² | Date of Mailing of this International Search Report ² |
|---|---|
| March 8, 1984 (08. 03. 84) | March 19, 1984 (19, 03. 84) |

| International Searching Authority ¹ | Signature of Authorized Officer ²⁰ |
|---|---|
| Japanese Patent Office | |

Form PCT/ISA/210 (second sheet) (October 1981)

| FURTHER INFORMATION CONTINUED FROM THE SECOND SHEET | | |
|---|---|---|
| A | JP,A,52-86197, (N.V. Philips' Gloeilampenfabrieken), 18 July 1977 (18. 07. 77), Page 2, lower left column, line 3 to lower right column, line 10 & DE,A1, 2600959 & FR,A1,2338547 & GB,A,1510444 | 9 |
| Y | JP,A,57-15236,(Sharp Corp.), 26 January 1982 (26. 01. 82), Page 1, lower left column, lines 13 to 14 | 10 |
| Y | JP,A,57-8992, (Sharp Corp.), 18 January 1982 (18. 01. 82), Page 1, lower left column, lines 11 to 15 | 10 |

**V.☐ OBSERVATIONS WHERE CERTAIN CLAIMS WERE FOUND UNSEARCHABLE [10]**

This international search report has not been established in respect of certain claims under Article 17(2) (a) for the following reasons:

1.☐ Claim numbers_____ because they relate to subject matter [12] not required to be searched by this Authority, namely:

2.☐ Claim numbers_____ because they relate to parts of the international application that do not comply with the prescribed requirements to such an extent that no meaningful international search can be carried out [13], specifically:

**VI.☐ OBSERVATIONS WHERE UNITY OF INVENTION IS LACKING [11]**

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

Form PCT/ISA/210 (supplemental sheet (2)) (October 1981)